(19) Europäisches Patentamt
European Patent Office
Office européen des brevets

(11) Numéro de publication: **0 270 465 B1**

(12) **FASCICULE DE BREVET EUROPEEN**

(45) Date de publication de fascicule du brevet: **11.12.91**

(51) Int. Cl.5: **C09D 5/16**, C09D 5/14

(21) Numéro de dépôt: **87420291.4**

(22) Date de dépôt: **28.10.87**

Le dossier contient des informations techniques présentées postérieurement au dépôt de la demande et ne figurant pas dans le présent fascicule.

# (54) Liants résistant aux salissures et organismes présents en milieu aqueux et leur procédé de préparation.

(30) Priorité: **30.10.86 FR 8615300**

(43) Date de publication de la demande: **08.06.88 Bulletin 88/23**

(45) Mention de la délivrance du brevet: **11.12.91 Bulletin 91/50**

(84) Etats contractants désignés: **AT BE CH DE ES FR GB GR IT LI LU NL SE**

(56) Documents cités:
**EP-A- 0 156 632**
**FR-A- 2 510 121**
**GB-A- 2 010 851**

**PATENT ABSTRACTS OF JAPAN, vol. 10, no. 71 (C-334)[2128], 20 mars 1986; & JP-A-60 210 677 (SHINTO TORYO K.K.) 23-10-1985**

**PATENT ABSTRACTS OF JAPAN, vol. 3, no. 3 (C-33), 16 janvier 1979; & JP-A-53 124 538 (NITTO KASEI K.K.) 31-10-1978**

**PATENT ABSTRACTS OF JAPAN, vol. 3, no. 3 (C-33), 16 janvier 1979 & JP-A-53 121 929 (NIPPON NOYAKU K.K.) 24-10-1978**

(73) Titulaire: **UNIVERSITE DE PROVENCE**
**3 Place Victor Hugo**
**F-13003 Marseille(FR)**

(72) Inventeur: **Perichaud, Alain**
**La Respelido 62 rue des Polytres**
**F-13013 Marseille(FR)**
Inventeur: **Sauvet, Georges**
**5 rue Charles Renouvier**
**F-75020 Paris(FR)**

(74) Mandataire: **Maureau, Philippe et al**
**Cabinet Germain & Maureau Le Britannia - Tour C 20, bld Eugène Déruelle**
**F-69003 Lyon(FR)**

**EP 0 270 465 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne des liants résistant aux salissures et organismes présents en milieu aqueux ainsi que leur procédé de préparation.

Dans la présente description, ces liants seront plus spécialement décrits dans leurs applications pour peintures ou revêtements résistant aux salissures marines, sans que cela constitue nullement une limitation, puisqu'ils trouveront aussi bien des applications intéressantes s'ils sont appliqués seuls.

Les dépôts d'organismes marins qui s'accumulent sur les surfaces immergées dans l'eau de mer, provoquent une augmentation de poids et de rugosité qui constitue un problème majeur de l'entretien naval, aussi bien pour les navires de gros tonnage que pour la navigation de pêche et de plaisance. Ce phénomène est plus généralement connu sous le nom de "fouling".

La lutte contre les salissures marines est actuellement réalisée par l'incorporation d'agents biocides (généralement des sels d'étain) aux peintures de protection. Ces agents biocides sont lentement relargués dans le milieu marin, d'où une efficacité limitée dans le temps et des problèmes de pollution.

EP-A-0 156 632 décrit un copolymère comprenant des esters acryliques ou méthacryliques qui peuvent éventuellement renfermer des fonctions ammonium quaternaire, mais celles-ci ne sont pas, d'après les auteurs, les groupements biactifs responsables de l'activité antifouling. L'introduction d'un ester hydrolysable est revendiquée comme facilitant l'érosion du copolymère. Ce dernier contient, par ailleurs, des composés organostanniques introduits par copolymérisation (tirbutylétain méthacrylate TBTM) qui sont, eux, responsables de l'activité antifouling.

FR-A-2 510 121 décrit une modification chimique du caoutchouc naturel chloré destiné à le rendre compatible avec des polyamides qui sont revendiqués pour leur activité antifouling. Les caoutchoucs naturels chlorés sont utilisés couramment dans les couches primaires anticorrosion, mais ils ne concernent pas les couches de finition antisalissure. D'une façon générale, les polymères chlorés sont fréquemment employés dans les liants pour peintures marines en raison de leur tenue mécanique et de leur bonne résistance à l'eau, mais ils n'interviennent pas dans les propriétés antisalissures.

L'interdiction partielle de l'usage des peintures antifouling contenant des sels d'étain, éléments toxiques envers les organismes marins d'origine végétale ou animale, a constitué l'un des facteurs poussant les inventeurs à mettre au point des peintures de remplacement ne présentant pas ces défauts.

C'est ainsi que la présente invention s'est donné pour but de proposer de nouveaux liants pour revêtements résistant aux salissures et organismes présents en milieu aqueux dont l'originalité consiste en ce qu'ils sont essentiellement constitués de l'association de sels d'ammonium quaternaire et des résines vinyliques chlorées.

Dans un premier mode de réalisation, les sels d'ammonium quaternaire sont incorporés par mélange aux résines vinyliques chlorées à raison de 10 à 20 % en poids.

Avantageusement, et selon un autre mode de réalisation de l'invention, les sels d'ammonium quaternaire sont greffés par une liaison covalente non hydrolysable sur une résine vinylique chlorée.

Dans ce dernier cas, le groupement biocide agit par contact et, n'étant pas relargable, ne présente pas de risque de pollution notamment pour le milieu environnant.

La résine vinylique chlorée selon l'invention est choisie parmi le poly(chlorure de vinyle), le poly-(chlorure de vinyle surchloré), le poly(chlorure de vinylidène), ainsi que leurs copolymères ou parmi les caoutchoucs chlorés.

Le greffage des sels d'ammonium quaternaire sur une résine vinylique chlorée a été réalisé en deux étapes :

La première étape consiste à substituer des chlores du polymère par une molécule comportant une fonction amine primaire ou secondaire et une fonction amine tertiaire :

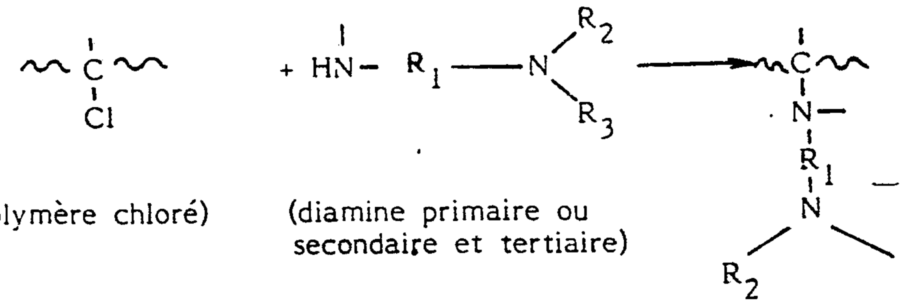
(Polymère chloré) (diamine primaire ou secondaire et tertiaire)

La deuxième étape est la quaternisation de la fonction amine tertiaire par un halogénure d'alkyle :

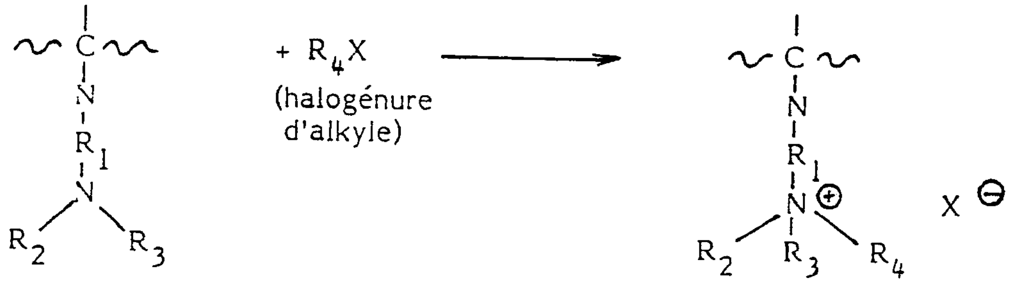

Lors de la première étape de cette synthèse, la réaction de substitution est en compétition avec la réaction d'élimination d'HCl (déshydrochloruration).

Il a donc été nécessaire de trouver un compromis dans les conditions expérimentales pour que le rapport substitution/élimination soit le plus favorable.

C'est ainsi que l'on a pu déterminer qu'il était possible de diminuer le pourcentage d'élimination au profit de la substitution en tamponnant le milieu de façon à abaisser le pH d'environ une unité par exemple en ajoutant de la carboglace ou de l'acide para toluène sulfonique.

Dans le cas où $R_1$ est un groupement aromatique, on a pu observer des taux de substitution très élevés (> 50 %) pratiquement sans aucune élimination.

Par ailleurs, pour minimiser les risques d'oxydation et de dégradation des produits, il faut utiliser une amine parfaitement anhydre et, si possible, manipuler sous atmosphère inerte.

La première étape peut être réalisée en solution dans le diméthylsulfoxyde (DMSO), le tétrahydrofuranne (THF) et le xylène ou en masse, les résines étant solubles dans la plupart des amines utilisées. Dans ce cas, l'amine joue à la fois le rôle de solvant et de réactif en grand excès. La concentration de la résine dans l'amine peut atteindre plusieurs moles par litre. La durée de la réaction est évidemment liée à la température.

On opère, de préférence, à une trentaine de degrés en-dessous de la température d'ébullition de l'amine (température à laquelle la proportion de la substitution par rapport à l'élimination est meilleure).

La durée de la réaction va de quelques jours en solution à quelques heures en masse.

En fin de réaction, il peut être intéressant de concentrer le milieu par distillation sous vide de l'excès d'amine afin de faciliter la précipitation. Celle-ci est réalisée, selon la résine considérée et le taux de substitution atteint, soit dans un excès de méthanol, soit dans un grand excès d'eau ou mieux d'eau salée, sous forte agitation.

Par ajout d'un solvant tel que l'acétone, le dichlorométhane, le chloroforme..., on peut diluer le milieu et verse ensuite le mélange dans de l'eau. Le polymère reste à la surface de la phase aqueuse et il est alors facile de le rincer à l'eau plusieurs fois, par décantation, jusqu'à obtenir un pH neutre (il faut éliminer toute l'amine qui'n'a pas réagi et qui donne ce pH basique). Le polymère est ensuite filtré et séché sous vide.

Avant la précipitation, on peut ainsi récupérer plus de 80 % en volume d'amine n'ayant pas réagi (et donc concentrer davantage le milieu réactionnel). Le milieu devient alors très visqueux. Par ajout de solvant (un volume du milieu réactionnel concentré à 80 % pour deux volumes, par exemple d'acétone), on peut diluer ce milieu et verser ensuite cette solution dans de l'eau : le polymère se présente alors sous forme de poudre plus ou moins fine ou de fibre, selon la quantité d'eau, la vitesse d'agitation, la température...

Il est parfois nécessaire de refroidir le milieu réactionnel concentré, lorsqu'on lui ajoute l'acétone ; en effet, cette cétone peut réagir sur l'amine résiduelle et donner lieu à une réaction exothermique. On peut également remplacer l'acétone par du dichlorométhane, du chloroforme ou tout autre solvant du polymère.

Afin d'isoler le polymère après la première étape, on peut également procéder ainsi : le milieu réactionnel, après concentration de 50 % en volume par distillation de l'amine en excès, est versé dans de l'eau sous agitation. Le précipité mal défini (gros grains, produit collant) et gorgé d'eau (rétention d'eau très importante) est alors repris par du xylène. Par extraction et décantation, on rince cette phase xylénique par de l'eau salée plusieurs fois, jusqu'à pH neutre. On sèche ensuite cette phase organique sur desséchant minéral. Le polymère, en solution dans le xylène, peut être ensuite traité directement dans la deuxième étape (comme il sera décrit dans l'exemple 5). On peut éventuellement concentrer le milieu en retirant par distillation le xylène en excès). Au lieu de sécher la phase xylénique, on peut également procéder à une distillation azéotropique qui va éliminer l'eau.

Le polymère récupéré quantitativement est généralement entièrement soluble dans des solvants tels

que le xylène, le dichlorométhane, le chloroforme, l'acétone, le THF. Il peut être purifié par précipitation et dissolution successives.

Lors de la deuxième étape de cette synthèse, un halogénure d'alkyle réagit sur la fonction amine tertiaire issue de la première étape pour conduire à un sel d'ammonium quaternaire greffé sur la résine.

Cet halogénure d'alkyle peut être du bromure d'octyle, de lauryle, de benzyle... comportant une longue chaîne carbonée linéaire ou aromatique.

Cette réaction peut être réalisée en solution dans le mélange xylène, méthylisobutyl cétone, méthanol classiquement utilisé par les fabricants de peintures ou en masse, dans le cas où le polymère obtenu est soluble dans l'halogénure d'alkyle. La concentration en polymère dans le milieu peut atteindre quelques moles par litre.

La température de réaction peut atteindre 100 °C mais il est préférable de se placer à une température de l'ordre de 60-80 °C pour éviter la dégradation du produit.

La durée de la réaction peut aller jusqu'à quelques heures si l'on désire un taux de conversion important.

On observe quelquefois la formation d'une fraction gélifiée insoluble, d'autant plus importante que la température est plus élevée et le temps de réaction plus long.

Le milieu réactionnel est ensuite versé dans un excès d'hydrocarbure aliphatique ($C_5$-$C_7$). Le polymère est alors isolé par filtration puis séché. Il peut être purifié par redissolution, dans du chloroforme par exemple puis par reprécipitation dans un grand excès d'heptane. Il est conseillé de travailler sous gaz inerte pour éviter tout risque d'altération du produit.

Lorsque cette second étape est réalisée en solution xylénique, il n'est pas nécessaire de précipiter le polymère ; celui-ci peut être utilisé directement pour la formulation en peinture (les peintures marines contiennent généralement du xylène, de la méthylisobutylcétone et du méthanol).

Seule une concentration du milieu peut être nécessaire avant livraison du liant aux formulateurs de peinture, en distillant l'excès de xylène.

Dans le cadre de leurs études et afin de déterminer les propriétés des peintures antisalissures selon l'invention, les Inventeurs ont mis au point un test simple permettant de mesurer la vitesse à laquelle un matériau immergé dans l'eau de mer se couvre de bactéries (celle-ci constituent un premier dépôt sur lequel viennent ensuite se fixer les organismes pluricellulaires). Un comptage des bactéries, prélevées sur des échantillons de quelques $cm^2$ et mises en culture, permet d'obtenir le nombre de bactéries déposées par $cm^2$ en fonction du temps.

La présente invention sera mieux comprise et ses avantages ressortiront bien des exemples suivants qui l'illustrent sans nullement la limiter.

## Exemple 1

A une solution de 1 g de PVC commercial (purifié par dissolution et précipitation successives) dans 10 ml de THF, on ajoute 0,1 g de chlorure d'octyl triméthyl ammonium (3 % en moles par rapport au PVC).

Des plaquettes de quelques $cm^2$ sont trempées dans ce mélange. Par évaporation du solvant, on obtient des films qui cessent d'être collants au bout de quarante-huit heures. Ces plaquettes sont immergées dans un bassin d'eau de mer naturelle. Le nombre de bactéries déposées au bout de sept jours est vingt-six fois inférieur à celui d'un échantillon de référence (film de PVC non traité).

Dans les mêmes conditions, une peinture commercial à base de sels d'étain présente une réduction du nombre de bactéries d'un facteur 80.

## Exemple 2

On dissout 3 g de PVC commercial purifié par dissolution et précipitation successives (0,048 mole) dans 150 ml de DMSO (on peut accélérer la dissolution en chauffant vers 50 °C). On ajoute en une seule fois 30,2 ml de diméthylamino-3 propylamine (0,24 mole). Le mélange est agité pendant six jours à température ambiante.

Le polymère jaune, récupéré par précipitation dans un excès de méthanol est soluble dans le chloroforme et le THF.

D'après son spectre de RMN $^1H$, il comporte 12,5 % de groupements diméthylamino-3 propylamino greffés. Le taux de déshydrochloruration est de 15 %.

1 g de ce polymère aminé est dissous dans 100 ml de THF. On ajoute 5,44 ml de chlorure d'octyle (0,032 mole). La solution est portée à 60 °C pendant vingt-quatre heures sous agitation. Dans ces conditions, on observe la formation partielle d'un gel au cours de la réaction. La fraction soluble (environ 70

% en poids) est précipitée dans un large excès de n-heptane. Le polymère, soluble dans le chloroforme et dans les solvants aromatiques, présente,d 'après son spectre de RMN $^1$H, un taux d'ammonium quaternaire de 7,5 % molaire (soit un rendement de 60 % par rapport aux fonctions amines tertiaires présentes). Le taux de déshydrochloruration est inchangé.

Des plaquettes de quelques cm$^2$ sont recouvertes d'un film de cette résine, déposée par enduction en solution chloroformique. Le vernis obtenu, souple et brillant, n'est plus collant au bout de quelques heures. Ces plaquettes sont immergées dans un bassin d'eau de mer naturelle. Le nombre de bactéries déposées au bout de vingt-huit jours est dix-huit fois inférieur à celui d'un échantillon de référence (film de PVC non traité).

Dans les mêmes conditions, une peinture marine commerciale à base de sels d'étain provoque une réduction du nombre de bactéries d'un facteur 44.

## Exemple 3

Dans cet exemple, on réalise comme suit la fixation des groupements diméthylamino propyle : 0,75 g de PVC sont dissous dans 30 ml de diméthylaminopropylamine. Le mélange est porté quatre heures à 100 °C sous agitation. En fin de réaction, les deux-tiers environ de l'excès d'amine sont éliminés par distillation sous vide. La solution concentrée est ensuite versée dans un excès d'eau salée. Le polymère jaune orange obtenu est soluble dans le chloroforme et le THF. D'après son spectre de RMN $^1$H, il comporte 27 % de groupements diméthylaminopropylamino fixés et le taux de déshydrochloruration est de 31 %.

L'étape de quaternisation est ensuite effectuée dans les conditions décrites à l'exemple 2.

L'application d'un film de la résine ainsi obtenue sur des plaquettes de quelques cm$^2$ donne des résultats comparables à ceux décrits dans l'exemple 2.

## Exemple 4

On dissout 1,5 g d'un copolymère à base de chlorure de vinyle et d'étherisobutyl vinylique (résine LAROFLEX MP 35 de BASF) dans 60 ml de diméthylaminopropylamine.

Le mélange est porté pendant quatre heures à 100 °C sous agitation.

La récupération du polymère est effectuée dans les conditions décrites dans l'exemple 3.

Le polymère jaune est soluble dans le chloroforme, le chlorure de méthylène, le THF et l'acétone, D'après son spectre RMN $^1$H, il comporte 11 % de groupements diméthylaminopropylamino, le taux de déshydrochloruration étant de 12,5 %.

1,2 g de ce polymère sont dissous dans 30 ml de chlorure d'octyle. Après quatre heures de réaction à 80 °C, la solution est concentrée par distillation sous vide des deux-tiers de l'excès de chlorure d'octyle.

Le polymère est alors précipité dans un grand excès d'heptane. Son spectre de RMN $^1$H indique la présence de 5,5 % molaire de groupements ammonium quaternaire fixés.

Le produit obtenu, testé dans les conditions décrites à l'exemple 2, donne des résultats comparables.

## Exemple 5

On dissout 56 g de LAROFLEX MP 35 de BASF dans 320 ml de diméthylaminopropylamine. Le mélange est porté pendant deux heures à 100 °C sous agitation. On récupère par distillation sous vide jusqu'à 80 % en volume d'amine qui n'a pas réagi.

On ajoute lentement, en agitant, et en refroidissant dans de l'eau glacée, 120 ml d'acétone et on verse lentement la solution dans 500 ml d'eau sous forte agitation.

Le polymère jaune, à l'aspect de fibre, surnage et on le rince à l'eau, par décantation, jusqu'à pH neutre. On le filtre et on le sèche sous vide.

40 g de ce polymère sont ajoutés, sous forte agitation, à une solution de 30 g de xylène, 20 g de méthylisobutylcétone et 10 g de méthanol.

On ajoute ensuite 18,5 g de bromure d'octyle et on chauffe à 65 °C pendant huit heures. Le liant ainsi préparé est ajouté aux autres constituants classiques d'une peinture (charges, plastifiants, pigments...).

Des plaques, recouvertes de cette peinture et immergées plusieurs mois en mer, présentent un aspect remarquablement exempt de salissures marines en comparaison aux plaques recouvertes par des peintures antifouling à base de sels d'étain.

Les liants obtenus pour mise en oeuvre du procédé décrit ci-avant permettent d'obtenir, une fois additionnés des composants classiques des peintures et notamment des solvants, des pigments, etc... des

peintures antisalissures, dont l'efficacité biocide, comparable à celle des peintures classiques à base de sels d'étain, ne présentent pas les inconvénients classiquement recontrés avec ces dernières, notamment quant à la pollution, ce qui constitue un progrès très important dans le domaine des peintures marines, et de façon plus générale, pour tous les revêtements destinés à être au contact de milieu aqueux renfermant des organismes vivantes : bactéries, champignons, levures, algues, coquillages...

Ces liants trouvent donc également des applications intéressantes dans le domaine des revêtements anti-corrosion bactérienne, de même que dans le domaine des revêtements à propriétés fongicides.

**Revendications**

1. Liant résistant aux salissures et micro-organismes présents en milieu aqueux, ledit liant comprenant un mélange, d'une part d'un polymère vinylique chloré choisi dans le groupe comprenant le polychlorure de vinyle, le polychlorure de vinyle surchloré, le polychlorure de vinylidène, ainsi que leurs copolymères, et les caoutchoucs chlorés, et d'autre part de 10-20 % en poids dudit polymère chloré d'un sel d'ammonium quaternaire dont au moins un substituant est chosi dans le groupe comprenant un dérivé hydrocarboné à longue chaine linéaire, aryle ou alkyle.

2. Liant selon la revendication 1, caractérisé en ce que le sel d'ammonium quaternaire est le chlorure d'ammonium octyle-triméthyle

3. Liant selon la revendication 1, caractérisé en ce que le polymère vinylique chloré est le polychlorure de vinyle.

4. Liant selon la revendication 3, caractérisé en ce que le sel d'ammonium quaternaire est le chlorure d'octyle-triméthyle.

5. Liant résistant aux salissures et micro-organismes présents en milieu aqueux, caractérisé en ce qu'il est obtenu à partir d'un polymère vinylique chloré choisi dans le groupe comprenant le polychlorure de vinyle, le polychlorure de vinyle surchloré, le polychlorure de vinylidène, ainsi que leurs copolymères, et les caoutchoucs chlorés, ledit polymère vinylique chloré étant greffé à un sel d'ammonium quaternaire, par substitution des atomes de chlore dudit polymère par une liaison covalente non hydrolysable, excluant une liaison $-CO_2-Z-$, dans laquelle Z est un alkylène comprenant de 2 à 4 atomes de carbone.

6. Liant selon la revendication 5, caractérisé en ce que le sel d'ammonium quaternaire greffé comprend une fonction amine primaire ou secondaire entre l'atome d'ammonium quaternaire et la chaine du polymère vinylique chloré.

7. Liant selon la revendication 5, caractérise en ce qu'au moins un substituant du sel d'ammonium quaternaire est un substituant à longue chaine choisi dans le groupe comprenant les alkyles et aryles linéaires.

8. Liant selon la revendication 7, caractérisé en ce que le substituant à longue chaine est choisi dans le groupe comprenant l'octyle, le lauryle, le benzyle.

9. Liant selon la revendication 5, caractérisé en ce qu'au moins un substituant du sel d'ammonium quaternaire est un substituant à longue chaîne choisi dans le groupe comprenant les alkyles et aryles linéaires, et ledit groupe alkyle ou aryle est disposé entre deux atomes d'azote dudit sel d'ammonium quaternaire.

10. Revêtement ayant une activité bactéricide et fongicide, et comprenant un liant selon l'une quelconque des revendications 1 à 9.

11. Peinture marine résistant aux salissures et organismes présents au milieux aqueux, comprenant un liant et un support volatile, ledit liant étant conforme à l'une quelconque des revendications 1 à 9.

12. Procédé d'obtention des liants selon l'une quelconque des revendications 5 à 9 caractérisé en ce qu'il consiste, en une première étape, à substituer des chlores du polymère par une molécule comportant

une fonction amine primaire ou secondaire et une fonction amine tertiaire, puis à effectuer la quaternisation de la fonction amine tertiaire par un halogénure d'alkyle.

**13.** Procédé selon la revendication 12, caractérisé en ce que la première étape est effectuée en présence d'un tampon permettant d'abaisser le pH d'environ une unité.

**14.** Procédé selon la revendication 12, caractérisé en ce que la première étape est réalisée en solution dans un solvant tel que le diméthylsulfoxyde ou le tétrahydrofuranne.

**15.** Procédé selon la revendication 12, caractérisé en ce que la première étape est réalisée en masse en présence d'un excès d'amine.

**16.** Procédé selon l'une des revendications 12 à 15, caractérisé en ce que la première étape est réalisée à une température inférieure d'environ 30° C à la température d'ébullition de l'amine.

**17.** Procédé selon l'une des revendications 12 à 16, caractérisé en ce que la quaternisation de la fonction amine tertiaire est réalisé à une température inférieure à 100° C, et de préférence entre 60 et 80° C, la réaction étant effectuée en solution ou en masse.

## Claims

**1.** Binder resistant to fouling and microorganisms present in aqueous media, the said binder comprising a mixture of, on the one hand, a chlorinated vinyl polymer chosen from the group comprising polyvinyl chloride, chlorinated polyvinyl chloride), polyvinylidene chloride and their copolymers and chlorinated rubbers and, on the other hand, in an amount of 10-20% by weight of the said chlorinated polymer, a quaternary ammonium salt in which at least one substituent is chosen from the group comprising a hydrocarbon derivative containing a long straight aryl or alkyl chain.

**2.** Binder according to Claim 1, characterised in that the quaternary ammonium salt is octyltrimethylammonium chloride.

**3.** Binder according to Claim 1, characterised in that the chlorinated vinyl polymer is polyvinyl chloride.

**4.** Binder according to Claim 3, characterised in that the quaternary ammonium salt is octyltrimethylammonium chloride.

**5.** Binder resistant to fouling and microorganisms present in aqueous media, characterised in that it is obtained from a chlorinated vinyl polymer chosen from the group comprising polyvinyl chloride, chlorinated polyvinyl chloride, polyvinylidene chloride and their copolymers and chlorinated rubbers, the said chlorinated vinyl polymer being grafted onto a quaternary ammonium salt by replacement of the chlorine atoms in the said polymer by a covalent nonhydrolysable bond, with the exception of a $-CO_2-Z-$ bond, in which Z is an alkylene comprising from 2 to 4 carbon atoms.

**6.** Binder according to Claim 5, characterised in that the grafted quaternary ammonium salt comprises a primary or secondary amine functional group between the quaternary ammonium atom and the chlorinated vinyl polymer chain.

**7.** Binder according to Claim 5, characterised in that at least one substituent of the quaternary ammonium salt is a long-chain substituent chosen from the group comprising straight-chain alkyls and aryls.

**8.** Binder according to Claim 7, characterised in that the long-chain substituent is chosen from the group comprising octyl, lauryl and benzyl.

**9.** Binder according to Claim 5, characterised in that at least one substituent of the quaternary ammonium salt is a long-chain substituent chosen from the group comprising straight-chain alkyls and aryls and the said alkyl or aryl group is arranged between two nitrogen atoms of the said quaternary ammonium salt.

10. Coating having a bactericidal and fungicidal activity and comprising a binder according to any one of Claims 1 to 9.

11. Marine paint resistant to fouling and organisms present in aqueous media, comprising a binder and a volatile carrier, the said binder being in accordance with any one of Claims 1 to 9.

12. Process for obtaining binders according to any one of Claims 5 to 9, characterised in that it consists, in a first step, in replacing the chlorines in the polymer by a molecule comprising a primary or secondary amine functional group and a tertiary amine functional group and in then performing the quaternisation of the tertiary amine functional group by means of an alkyl halide.

13. Process according to Claim 12, characterised in that the first step is performed in the presence of a buffer enabling the pH to be lowered by about one unit.

14. Process according to Claim 12, characterised in that the first step is carried out in solution in a solvent such as dimethyl sulphoxide or tetrahydrofuran.

15. Process according to Claim 12, characterised in that the first step is carried out in bulk in the presence of an excess of amine.

16. Process according to one of Claims 12 to 15, characterised in that the first step is carried out at a temperature which is about 30 °C lower than the boiling point of the amine.

17. Process according to one of Claims 12 to 16, characterised in that the quaternisation of the tertiary amine functional group is carried out at a temperature below 100 °C and preferably between 60 and 80 °C, the reaction being performed in solution or in bulk.

**Patentansprüche**

1. Bindemittel, das in wässrigem Medium vorhandenen Verschmutzungen und Mikroorganismen widersteht, wobei das Bindemittel eine Mischung enthält, die einerseits ein polymeres chlorierten Vinyl, ausgewählt aus der Gruppe bestehend aus Polyvinylchlorid, nachchloriertem Polyvinylchlorid, Polyvinylidenchlorid, sowie deren Copolymere und chlorierte Kautschuke, und andererseits 10 bis 20 Gew.-% bezüglich der genannten chlorierten Polymere eines quartären Ammoniumsalzes aufweist, von dem zumindest ein Substituent ausgewählt ist aus der Gruppe bestehend aus einem Kohlenwasserstoffderivat mit langer linearer Aryl- oder Alkylkette.

2. Bindemittel nach Anspruch 1, dadurch gekennzeichnet, daß das quartäre Ammoniumsalz Octyltrimethylammoniumchlorid ist.

3. Bindemittel nach Anspruch 1, dadurch gekennzeichnet, daß das polymere chlorierte Vinyl Polyvinylchlorid ist.

4. Bindemittel nach Anspruch 3, dadurch gekennzeichnet, daß das quartäre Ammoniumsalz Octyltrimethylchlorid ist.

5. Bindemittel, das in wässrigem Medium vorhandenen Verschmutzungen und Mikroorganismen widersteht, dadurch gekennzeichnet, daß es aus einem polymeren chlorierten Vinyl, ausgewählt aus der Gruppe bestehend aus Polyvinylchlorid, nachchloriertem Polyvinylchlorid, Polyvinylidenchlorid, sowie deren Copolymere und der chlorierten Kautschuke erhalten wird, wobei das polymere chlorierte Vinyl an ein quartäres Ammoniumsalz gebunden ist, indem die Chloratome des Polymeren durch eine Kovalente nicht hydrolysierbare Bindung substituiert werden, ausschließlich einer Bindung $CO_2$-Z-, bei der Z ein Alkylen mit 2 bis 4 Kohlenstoffatomen ist.

6. Bindemittel nach Anspruch 5, dadurch gekennzeichnet, daß das angebundene quartäre Ammoniumsalz zwischen dem quartären Ammoniumatom und der Kette des polymeren chlorierten Vinyls eine primäre oder sekundäre Aminfunktion aufweist.

7. Bindemittel nach Anspruch 5, dadurch gekennzeichnet, daß zumindest ein Substituent des quartären Ammoniumsalz ein Substituent mit langer Kette ist, ausgewählt aus der Gruppe enthaltend die lineare Alkyle und Aryle.

8. Bindemittel nach Anspruch 7, dadurch gekennzeichnet, daß der Substituent mit langer Kette ausgewählt ist aus der Gruppe enthaltend Octyl-, Lauryl-, Benzyl-.

9. Bindemittel nach Anspruch 5, dadurch gekennzeichnet, daß zumindest ein Substituent des quartären Ammoniumsalz ein Substituent mit langer Kette ist, ausgewählt aus der Gruppe enthaltend die linearen Alkyle und Aryle, und wobei die genannte Alkyl- oder Arylgruppe zwischen zwei Stickstoffatomen des genannten quartären Ammoniumsalz angeordnet ist.

10. Überzugschicht mit einer bakteriziden und fungiziden Wirkung, und enthaltend ein Bindemittel nach einem der Ansprüche 1 bis 9.

11. Farbe für das Schiffswesen, die in wässrigem Medium vorhandenen Verschmutzungen und Mikroorganismen widersteht, enthaltend ein Bindemittel und einen verdampfbaren Träger, wobei das Bindemittel einem der Ansprüche 1 bis 9 entspricht.

12. Verfahren zum Herstellen eines Bindemittels nach einem der Ansprüche 5 bis 9, dadurch gekennzeichnet, daß es einen ersten Schritt aufweist, bei dem die Chloratome des Polymeren durch ein Molekül substituiert werden, das eine primäre oder sekundäre Aminfunktion und eine tertiäre Aminfunktion aufweist, wobei die Quarternisierung der tertiären Aminfunktion durch ein Alkylhalogenid bewerkstelligt wird.

13. Verfahren nach Anspruch 12, dadurch gekennzeichnet, daß der erste Schritt in Gegenwart eines Puffers durchgeführt wird, der ein Absenken des pH um etwa eine Einheit ermöglicht.

14. Verfahren nach Anspruch 12, dadurch gekennzeichnet, daß der erste Schritt in Lösung durchgeführt, und zwar in einem Lösungsmittel wie Dimethylsulfoxid oder Tetrahydrofuran.

15. Verfahren nach Anspruch 12, dadurch gekennzeichnet, daß der erste Schritt ohne Lösungsmittel in Gegenwart eines Überschuß an Amin durchgeführt wird.

16. Verfahren nach einem der Ansprüche 12 bis 15, dadurch gekennzeichnet, daß der erste Schritt bei einer Temperatur von etwa 30 °C unterhalb der Siedetemperatur des Amines durchgeführt wird.

17. Verfahren nach einem der Ansprüche 12 bis 16, dadurch gekennzeichnet, daß die Quarternisierung der tertiären Aminfunktion bei einer Temperatur unterhalb von 100 °C, vorzugsweise zwischen 60 und 80 °C durchgeführt wird, wobei die Reaktion in Lösung oder ohne Lösungsmittel durchgeführt wird.